(19) Europäisches Patentamt
European Patent Office
Office européen des brevets

(11) **EP 4 428 719 A1**

(12) **EUROPEAN PATENT APPLICATION**

(43) Date of publication:
**11.09.2024 Bulletin 2024/37**

(21) Application number: **23161346.4**

(22) Date of filing: **10.03.2023**

(51) International Patent Classification (IPC):
**G06F 18/243** (2023.01)   **G06V 10/44** (2022.01)
**G06N 3/02** (2006.01)   **G06F 18/213** (2023.01)
**G06F 18/2415** (2023.01)

(52) Cooperative Patent Classification (CPC):
**G06F 18/243; G06F 18/213; G06F 18/2415;
G06N 3/0895; G06N 3/09; G06V 10/454;**
G06N 3/0499

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Toyota Jidosha Kabushiki Kaisha
Toyota-shi, Aichi-ken 471-8571 (JP)**
• **Czech Technical University in Prague
16627 Praha 6 (CZ)**

(72) Inventors:
• **CHUMERIN, Nikolay
1140 Brussels (BE)**

• **AL JUNDI, Rahaf
1140 Brussels (BE)**
• **OLMEDA REINO, Daniel
1140 Brussels (BE)**
• **VOJÍR, Tomas
16627 Prague 6 (CZ)**
• **MATAS, Jiri
16627 Prague 6 (CZ)**
• **SOCHMAN, Jan
16627 Prague 6 (CZ)**

(74) Representative: **Cabinet Beau de Loménie
158, rue de l'Université
75340 Paris Cedex 07 (FR)**

(54) **SYSTEM AND METHOD FOR OUT-OF-DISTRIBUTION DETECTION**

(57)    A system for detecting whether an element belongs to at least one class, the system being configured to:
- obtain an in-distribution probability distribution (26ID) of the at least one class, the in-distribution probability distribution being a distribution of a probability to belong to the at least one class as a function of a result of at least one classifier model;
- obtain an out-of-distribution probability distribution (26OOD), the out-of-distribution probability distribution being a distribution of a probability not to belong to any one of the at least one class as a function of the result of the at least one classifier model;
- determine whether the element belongs to the at least one class based on a comparison between a likelihood that the element belongs to one of the at least one class, determined based on the in-distribution probability distribution, and a likelihood that the element does not belong to any one of the at least one class, determined based on the out-of-distribution probability distribution.

FIG.3

EP 4 428 719 A1

## Description

BACKGROUND OF THE INVENTION

1. Field of the invention

The present disclosure relates to the field of machine learning, and more particularly to a system and method for detecting whether an element belongs to at least one class. The system and method may find applications in all kinds of industries, including the automotive industry. For instance, the system and method may be used in the context of computer vision and/or safety-critical applications to understand a vehicle's environment in order to adequately control it, or to monitor and support human activities in places such as a factory.

2. Description of Related Art

Automated systems are increasingly used to classify inputs into one or more categories, also known as classes. However, while these systems are usually able to identify the most frequent classes, a given input may happen not to belong to any of those classes. The ability to recognize such inputs has been referred to differently based on the context in which it emerged and is generally known as out-of-distribution (OOD) detection, open set recognition (OSR), anomaly or outlier detection, or yet one-class classification.

For instance, the problem of OOD detection is important in many computer vision applications. One can even argue that no model obtained by machine learning on a training set should be deployed without the OOD detection ability, since in practice it is almost never the case that all the data the model will make predictions on will be drawn from the same base data that generated the aforementioned training set. For undetected out-of-distribution data, the prediction will in general be arbitrary, with possibly grave real-world consequences, especially in safety-critical applications such as assisted or autonomous driving.

Existing OOD detection solutions focus on improving the OOD robustness of a classification model trained exclusively on in-distribution data. However, other approaches can be followed, and there is room for a new type of system and method for detecting whether an element belongs to at least one class.

The following references give further background information about machine learning:

[REF. 1] Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International Conference on Machine Learning, pages 8748-8763. PMLR, 2021.

[REF. 2] Paszke, A. et al. PyTorch: An Imperative Style, High-Performance Deep Learning Library. In Advances in Neural Information Processing Systems 32. Curran Associates, Inc., pp. 8024-8035, 2019

[REF. 3] Li Deng. The MNIST database of handwritten digit images for machine learning research. IEEE signal processing magazine, 29(6):141-142, 2012.

[REF. 4] Alex Krizhevsky. Learning multiple layers of features from tiny images. Technical report, 2009.

[REF. 5] Bolei Zhou, Agata Lapedriza, Aditya Khosla, Aude Oliva, and Antonio Torralba. Places: A 10 million image database for scene recognition. IEEE transactions on pattern analysis and machine intelligence, 40(6):1452-1464, 2017.

[REF. 6] Yuval Netzer, TaoWang, Adam Coates, A. Bissacco, BoWu, and A. Ng. Reading digits in natural images with unsupervised feature learning. In NIPS Workshop on Deep Learning and Unsupervised Feature Learning, 2011.

[REF. 7] Antonio Torralba, Rob Fergus, and William T Freeman. 80 million tiny images: A large data set for nonparametric object and scene recognition. IEEE transactions on pattern analysis and machine intelligence, 30(11):1958-1970, 2008.

[REF. 8] Jerzy Neyman and Egon Sharpe Pearson. Ix. on the problem of the most efficient tests of statistical hypotheses. Philosophical Transactions of the Royal Society of London. Series A, Containing Papers of a Mathematical or Physical Character, 231(694-706):289-337, 1933.

[REF. 9] Sagar Vaze, Kai Han, Andrea Vedaldi, and Andrew Zisserman. Open-set recognition: A good closed-set classifier is all you need. In International Conference on Learning Representations, 2022.

SUMMARY

In this respect, the present disclosure relates to a system for detecting whether an element belongs to at least one class, the system being configured to:

- obtain an in-distribution probability distribution of the at least one class, the in-distribution probability distribution being a distribution of a probability to belong to the at least one class as a function of a result of at least one classifier model;

- obtain an out-of-distribution probability distribution, the out-of-distribution probability distribution being a distribution of a probability not to belong to any one of the at least one class as a function of the result of the at least one classifier model;

- determine whether the element belongs to the at least one class based on a comparison between a likelihood that the element belongs to one of the at least one class, determined based on the in-distribution probability distribution, and a likelihood that the element does not belong to any one of the at least one class, determined based on the out-of-distribution probability distribution.

The system may include a processor configured to carry out the recited steps. In embodiments, the system may have the hardware structure of a computer.

The system is configured not only to determine to which class the element belongs, if any, but to detect whether the element does not belong to any of the at least one class.

The element may be obtained from a sensor, e.g. a microphone, an imaging device such as a camera, electrodes, etc. The system may comprise adequate means for pre-processing the element to transform it to a form suitable for the determination step.

The at least one class may comprise two classes or more, for instance five classes or more, ten classes or more or yet twenty classes or more.

At least one classifier may be provided to determine to which class the element belongs. As used herein, for conciseness and unless the context indicates otherwise, "a", "an", and "the" are intended to refer to "at least one" or "each" and to include plural forms as well. A result of the classifier model may be any output of the classifier based on which it can be determined to which class the element belongs. For instance, a result of the classifier model may include a score, a logit, a distance, etc., as applicable.

The in-distribution (ID) probability distribution, hereinafter shortened as ID distribution, is therefore expressed as a probability as a function of the result of the classifier model, irrespective of how it is obtained. In practice, as will be discussed below, the ID distribution may be obtained based on the results of the classifier model. The ID distribution may be a per-class distribution. In other words, the ID distribution of the at least one class may include one or more probability distributions for the respective at least one classes known to the classifier model (e.g. one distribution per class), as opposed to single distribution for all the known classes. Nevertheless, for the sake of conciseness, ID distribution is used in singular herein, without loss of generality.

The out-of-distribution (OOD) probability distribution, hereinafter shortened as OOD distribution, is likewise expressed as a probability as a function of the result of the classifier model, irrespective of how it is obtained. In practice, as will be discussed below, the OOD distribution may be obtained independently from the results of the classifier model. The OOD may be obtained based on theoretical considerations about the classifier model. As opposed to the per-class ID distribution, the OOD distribution may be a single distribution modeling all OOD data.

More generally, the OOD distribution and the ID distribution may be expressed in the same space.

The classifier model may take, as an input, features extracted from the element. The features may be extracted by a feature extractor, such as a neural network model. The type of feature extractor may depend on the format of the element; for instance, if the element is an image, a convolutional neural network (CNN) may be used as a feature extractor.

Based on the ID distribution, the system may determine a likelihood that the element belongs to one of the at least one class, referred to as the ID likelihood. Besides, based on the OOD distribution, the system may determine a likelihood that the element does not belong to any one of the at least one class, referred to as the OOD likelihood. The system compares the ID likelihood to the OOD likelihood. The comparison may encompass any operation, e.g. one or more mathematical operations, that enable comparing the two likelihoods, such as a difference, a ratio, etc. The ID likelihood and/or OOD likelihood may be based on the probability for the element to belong or not to one of the classes, with possible factors, offsets, etc.

In an example, the ID and/or OOD likelihoods may be obtained by inputting the element to the at least one classifier model to get a classification result, and determining the ID and/or OOD likelihoods based on the classification result and the ID and/or OOD distributions, respectively.

By basing the OOD determination not only on the ID distribution but also on an OOD distribution, the proposed system can better discriminate between ID elements and OOD elements. Accordingly, OOD detection is enhanced.

Optionally, the at least one classifier model comprises N classifier models, N greater than or equal to 2, and the in-distribution probability distribution and the out-of-distribution probability distribution are N-dimensional distributions. Each dimension of the N-dimensional distributions corresponds to the result of one of the classifier models. Using a plurality of classifier models enables to combine the strengths of different classification approaches and therefore to provide a better characterization of the ID and/or OOD distributions. As a consequence, the OOD detection performed by the system is more robust.

Optionally, the at least one classifier model is a machine learning model, e.g. a neural network model. Specifically, in embodiments, the at least one classifier model includes at least one of a linear probe classifier, a nearest mean classifier and a multi-layer perceptron.

A linear probe classifier is a neural network model relying on projections on discriminative directions. A nearest mean classifier is a neural network model relying on means representing each of the at least one in-distribution class. A multi-layer perceptron is a fully-connected type of feedforward neural network, which may comprise a plurality of perceptron layers. In spite of their overall simple principles, these neural networks provide helpful classification results in the context of the proposed system. Robustness of the OOD detection is thus ensured while keeping the system relatively simple.

Optionally, at least one of the in-distribution probability distribution and the out-of-distribution probability distribution is modeled as a normal distribution. A normal distribution is known *per se* and characterized by a mean and a standard deviation, variance or covariance. If the at least one classifier model comprises a plurality of N classifier models, the normal distribution may be an N-dimensional normal distribution. In alternatives, more complex techniques could be used to model the ID distribution and/or the OOD distribution, such as the non-parametric Parzen estimate (also known as Kernel Density Estimation, which is known *per se*).

The normal distribution, although being an approximation for the ID distribution, turns out to be reasonably representative over a wide range of classification tasks. As regards the OOD distribution, the normal distribution offers a reasonable estimation without requiring knowledge of the training dataset or of the OOD elements. Therefore, a normal distribution for the ID distribution and/or the OOD distribution enables the system to be implemented in an efficient and effective manner.

Optionally, at least one of the in-distribution probability distribution and the out-of-distribution probability distribution is determined based on results of the at least one classifier model on a training dataset thereof. As regards the ID distribution, for instance, the normal distribution (or any other desired distribution) for the ID distribution may be fitted to the training data for the classifier model. As regards the OOD distribution, although not necessary, the classifier model training data may be taken into account to model the OOD distribution more accurately, e.g. to make it cover the whole range of data. As an alternative, auxiliary OOD data may be used instead of the classifier model training data. Thus, the ID distribution and/or the OOD distribution can be made more specific to the classes at stake, thereby improving the OOD detection ability of the system as a whole.

Optionally, the at least one class comprises two or more classes and the comparison takes into account a threshold which equalizes a false negative rate for the two or more classes. The ID likelihood and/or the OOD likelihood, and/or any combination thereof, can be compared to the threshold. In order to avoid that some classes produce higher false negative rates than others, the threshold is adapted to equalize a false negative rate for the two or more classes. The threshold may be a function of a cumulative histogram of the two or more classes. This enables proper calibration of the system. In addition, this property is important in safety-critical application where samples from certain classes otherwise tend to be reported as OOD data more often than those from other classes.

Optionally, the element comprises at least one image, at least one video, at least one audio signal, at least one electrical signal or a combination thereof. As mentioned above, the element may be obtained from an appropriate sensor.

The present disclosure is further directed to a computer-implemented method for detecting whether an element belongs to at least one class, comprising:

- obtaining an in-distribution probability distribution of the at least one class, the in-distribution probability distribution being a distribution of a probability to belong to the at least one class as a function of a result of at least one classifier model;
- obtaining an out-of-distribution probability distribution, the out-of-distribution probability distribution being a distribution of a probability not to belong to any one of the at least one class as a function of the result of the at least one classifier model;
- determining whether the element belongs to the at least one class based on a comparison between a likelihood that the element belongs to one of the at least one class, determined based on the in-distribution probability distribution, and a likelihood that the element does not belong to any one of the at least one class, determined based on the out-of-distribution probability distribution.

The method, hereinafter referred to as the detecting method, may be carried out by the above-described system and may have any of the features described with respect to the system. The method may be implemented on one or several computers.

The present disclosure is further directed to a computer-implemented method for training the above-described system, comprising:

- providing a pre-trained feature extractor;

- providing a training dataset;
- training the at least one classifier model based on features of the training dataset extracted by the feature extractor.

The feature extractor is configured to extract features from elements to classify, as mentioned above. The extracted features are such that they can be processed by the at least one classifier model. The feature extractor is considered to be pre-trained, e.g. sufficiently trained before the above training method is carried out.

The type of training for the classifier model may be any suitable training. For instance, the classifier model training is optionally supervised, in which case the training dataset should comprise class labels. Semi-supervised, weakly supervised trainings, but also self-supervised or unsupervised trainings are encompassed too. The training may be based on a contrastive loss function, namely a loss function such that inputs which are deemed similar in view of a certain criterion are made close to one another in the network latent space, whereas inputs which are deemed dissimilar in view of that criterion are made far away from one another in the network latent space, with a given metric. Contrastive learning enables to make the latent space a metric space, in order to have a natural metric on the latent space to ultimately classify the inputs.

Thanks to the above training method, the above-described system can be trained in an efficient manner, relying on a pre-trained feature extractor. In addition, as opposed to other approaches which train the feature extractor and the classifier model end-to-end, the present method proposes to use a generically pre-trained feature extractor.

The training method can be implemented on one or several computers.

Optionally, the feature extractor is not fine-tuned during the training of the at least one classifier model. That is, the weights of the feature extractor are kept constant throughout the above training method. This simplifies the training and does not add any task-related bias to the feature extractor.

Optionally, the pre-trained feature extractor has been trained independently from the at least one class. The features are therefore extracted with no bias from the classes. This favors a better OOD detection for the system.

Optionally, the pre-trained feature extractor has been trained in a self-supervised manner. This enables to pre-train the feature extractor on a very large amount of data with little or no annotation costs. Thus, the feature extractor may provide very sophisticated features, the features being sophisticated enough to intrinsically represent any type of class that the classifier models will then have to handle.

Optionally, the pre-trained feature extractor may have been trained on a dataset comprising at least 1 million samples, preferably at least 10 million samples, yet preferably at least 100 million samples. In another perspective, the pre-trained feature extractor may have been trained on a dataset comprising at least 1000 times as many samples as the number of samples per class for training the classifier models. This enables the feature extractor to provide very robust representations (features), which then form a strong basis for OOD detection. The more robust the representation, the simpler the classifier models may be, because the major part in the OOD detection would be played by the representation.

Optionally, every element of the training dataset belongs to the at least one class. That is, the classifier models are trained on in-distribution data only. As mentioned above, neither the system nor the training method thereof requires any sample of OOD data to be able to efficiently detect OOD data.

Optionally, the training method further comprises calculating at least one of the in-distribution probability distribution and the out-of-distribution probability distribution based on results of the at least one classifier model on a training dataset thereof.

The present disclosure is further directed to a computer program set including instructions for executing the steps of the above-described detecting method or training method when said program set is executed by at least one computer. This program can use any programming language and take the form of source code, object code or a code intermediate between source code and object code, such as a partially compiled form, or any other desirable form.

The present disclosure is further directed to a recording medium readable by a computer and having recorded thereon at least one computer program including instructions for executing the steps of the above-described detecting method or training method. The recording medium can be any entity or device capable of storing the program. For example, the medium can include storage means such as a ROM, for example a CD ROM or a microelectronic circuit ROM, or magnetic storage means, for example a hard disk.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a block diagram illustrating a training method according to an embodiment;

- Fig. 2 includes charts illustrating multi-dimensional ID distributions and OOD distributions;
- Fig. 3 is a chart illustrating a multi-dimension ID distribution and a multi-dimensional OOD distribution;
- Fig. 4 is a block diagram illustrating a hardware structure of a system according to an embodiment.

DETAILED DESCRIPTION OF EMBODIMENTS

The present disclosure relates to OOD detection in classification tasks. Although applicable to a variety of input types, such as images, videos, audio signals, electrical signals or a combination thereof, the present disclosure takes, without loss of generality, the example of images. Hereinafter, for the sake of conciseness, the elements to classify may be simply referred to as images.

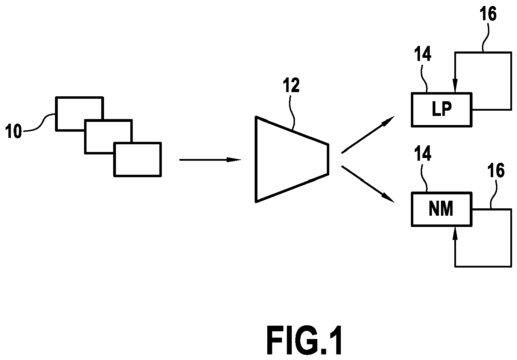

Classification is to be carried out by one or more classifier model. Such classifier models may take, as inputs, not directly the images 10 shown in Fig. 1 but a representation thereof. In this perspective, Fig. 1 shows a feature extractor 12 which is assumed to be pre-trained to provide generic representations of the images 10 which are input thereto.

Thus, the feature extractor 12 may have been pre-trained independently from the classes based on which OOD detection is to be performed. The classifier models may even be unknown to the feature extractor 12. The feature extractor 12 may be an off-the-shelf model, which enables it to be trained once and for all on a huge amount of data, as discussed above, especially if the feature extractor 12 can be trained in a self-supervised manner. In other words, retraining or fine-tuning of the feature extractor 12 is not necessary, which saves time and costs.

In an example, the feature extractor 12 may comprise the image encoder from CLIP [REF. 1]. From the point of view of OOD detection, what makes the CLIP representation appealing is that it was trained on image-text pairs instead of a fixed set of classes. This, together with the possible self-supervised training, allows the model to extract very rich representation of the visual world. This makes it a good candidate for separating ID classes from OOD data irrespective of the type of semantic and distribution shift if these shifts are covered by natural language and represented sufficiently by the training data. The image encoder of the CLIP model produces 768-dimensional feature vectors.

In another example, the feature extractor 12 may comprise the image encoder from ImageNet, which is trained with full supervision on classification tasks. Specifically, the feature extractor 12 may use the penultimate layer of the ViT-L/16 model pre-trained on ImageNetlk available in the PyTorch Torchvision library [REF. 2]. It produces 1048-dimensional feature vectors.

Given the feature extractor 12, it is desired to train at least one classifier model 14. In Fig. 1, two classifier models 14 are illustrated, and this example will be adhered to later on for the sake of conciseness, without any loss of generality about the number or type of classifier models. However, the classifier models 14 may be trained to recognize the same classes.

In this respect, a training dataset is provided. In Fig. 1, it is assumed that the images 10 come from the training dataset. As known *per se* in the art, the classifier models 14 are trained based on the features of the training dataset extracted by the feature extractor 12. The training may be of any type suitable for the classifier models and depending on the data included in the training dataset. For instance, if the training dataset comprises labels, the classifier models 14 can be trained in a supervised manner.

As discussed above, the training dataset for the classifier models 14 may comprise much less samples than the training dataset for the feature extractor 12. In order to achieve good classification results, it is possible to train the classifier models 14 on the whole available training dataset, meaning that it is not necessary to save some samples as OOD samples. In other words, every element of the training dataset (e.g. every image 10) may belong to a class that is known to the classifier models 14. In yet other words, the classifier models 14 may be trained on ID data only.

Training is generally represented by arrows 16. As shown in Fig. 1, the training of the classifier models 14 may have no influence on the feature extractor 12. In other words, the feature extractor 12 may not be fine-tuned or otherwise updated during the training of the classifier models 14.

As mentioned above, the at least one classifier model includes at least one of a linear probe classifier, a nearest mean classifier and a multi-layer perceptron. Of course, other types of classifier models are encompassed. In the present example, the two classifier models 14 include a linear probe (LP) classifier and a nearest mean (NM) classifier.

In an example, the LP classifier comprises a (possibly single) linear projection layer followed by a normalization such as softmax (multi-class logistic regression model). This type of classifier has been used in representation learning but was generally trained end-to-end with the image encoder. The LP classifier uses logits to classify the inputs, e.g. before the softmax, and therefore is able to output those logits (e.g. maximum logits).

In an example, the Nearest Mean classifier is configured to assign data to the class having the nearest class mean. Which class mean is the nearest may be measured by a suitable distance, e.g. the $L_2$ distance. Learning this classifier may comprise, or even consist of, mean computation for each class. In addition to the predicted classes, the NM classifier may output, for each input, a distance $d_{NM}$ to the nearest mean.

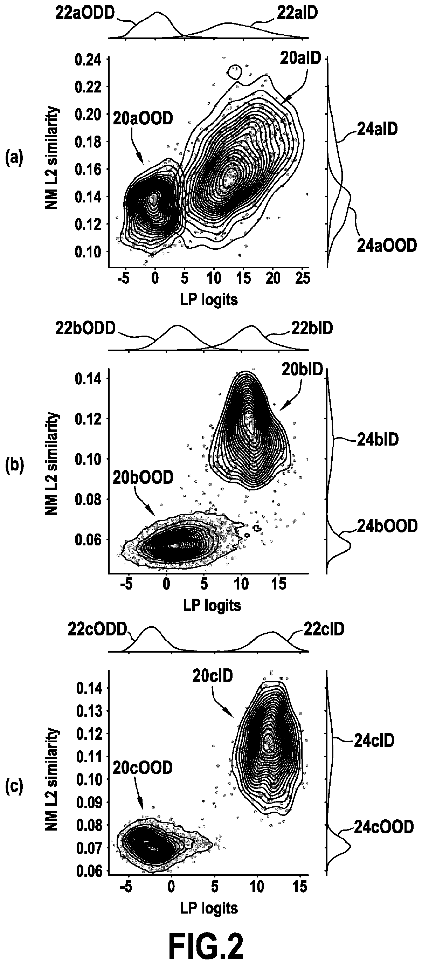

Figure 2 includes three charts, each of which plots the NM $L_2$ similarity (left axis) vs. the LP logits (bottom axis) for different datasets. The NM $L_2$ similarity is calculated from the NM distance $d_{NM}$ as $1/(1 + d_{NM})$. In these charts, each dot represents an element (e.g. an image). In Fig. 2(a), a first point cloud 20aID represents points which come from the dataset on which the classifier models 14 were trained. The first point cloud 20aID is regarded as representing one class of the ID data. In this example, the first point cloud 20aID is obtained from one of six randomly-selected classes of the MNIST dataset (here class 0) [REF. 3], whereas four remaining classes of the MNIST dataset form OOD data, which, when plotted, forms a second point cloud 20aOOD.

The marginal empirical distributions are shown on the top/right axes respectively. When combined, the scores (e.g. logit, similarity, etc.) produce a 2D space to which each sample is mapped. Therefore, the ID distribution and the OOD distribution are N-dimensional distributions (here N=2).

With reference to Fig. 2(a), the ID data and OOD data differ by a semantic shift only: basically, the data have the same nature but do not represent the same thing. In such types of problems, the LP classifier tends to separate the ID and OOD datasets better. This is evidenced by the components of the ID and OOD distributions: as can be seen on the top axis, the LP-logit OOD distribution 22aOOD and the LP-logit ID distribution 22aID based on the LP logits are well separated, whereas the NM-similarity OOD distribution 24aOOD and the NM-similarity ID distribution 24aID on the right axis are much more intertwined. Specifically, in this context, the LP classifier tends to work better by finding a suitable linear projection where the ID classes can be well separated whereas the NM classifier struggles distinguishing small distances in the high-dimensional representation.

The charts of Figs. 2(b) and 2(c) differ from that of Fig. 2(a) by the origin and type of the data. Fig. 2(b) represents a problem with mixed semantic and domain shifts. In this example, the first point cloud 20bID is obtained from class 2 of the CIFAR10 dataset [REF. 4], whereas the second point cloud 20bOOD is obtained from the places365 dataset [REF. 5]. In this type of problem, NM classifier performs typically better, as can be seen based on the separation of NM-similarity based distributions 24bID and 24bOOD, as compared to LP-logit based distributions 22bID and 22bOOD.

Fig. 2(c) represents, likewise and with corresponding reference signs including the letter c, that for some problems, both LP and NM perform well. ID data in this case comes from class 1 of CIFAR10, whereas OOD data is obtained based on SVHN [REF. 6].

An additional teaching from Fig. 2 is that, in all cases, moving from a single one-dimensional distribution to a multi-dimensional distribution already allows better separation of ID data from OOD data. Therefore, in the OOD detection method discussed below, it is desirable that the obtained ID distribution and/or the OOD distribution be N-dimensional distributions, N greater than or equal to 2 (here, N=2).

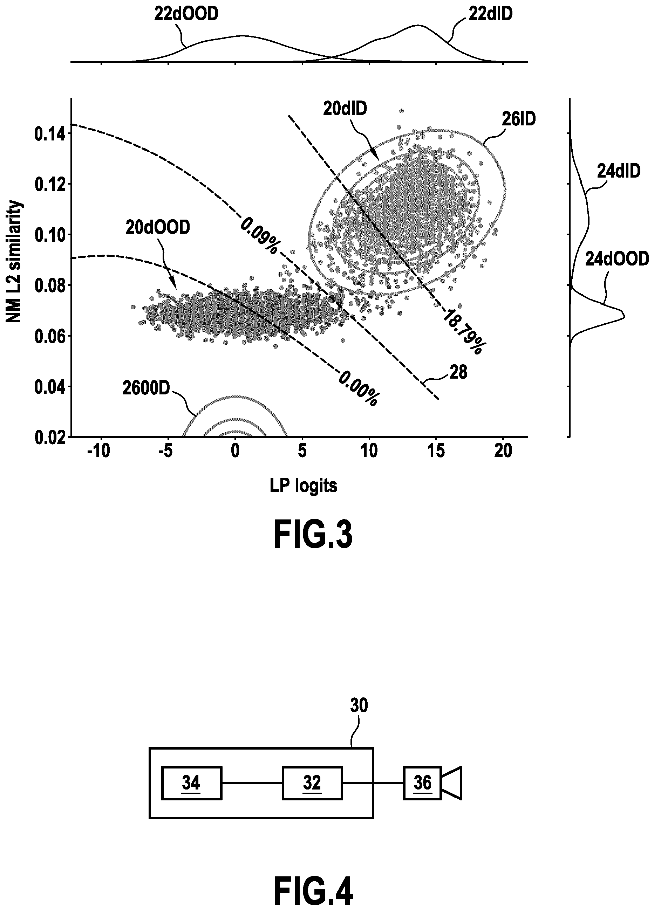

Figure 3 is a chart similar to those of Fig. 2 and with reference to which a system for detecting whether an element belongs to at least one class, namely a system for OOD detection, will be described. In Fig. 3, a first point cloud 20dID represents points which come from the dataset on which the classifier models 14 were trained. The first point cloud 20dID is regarded as representing one class of ID data. In this example, the first point cloud 20aID is obtained from class 9 from CIFAR10, whereas the second point cloud 20dOOD is obtained from the tiny ImageNet dataset [REF. 7]. By definition, the proposed system does not have access to the OOD data (i.e. does not identify them as OOD as such), but these data are plotted in Fig. 3 to facilitate the readers' understanding.

As described above, the proposed system obtains an ID distribution of the classes. For instance, the ID distribution may be based on results of the classifier models on the training dataset thereof.

As a first implementation, the ID distribution of the classes may be the 2-dimensional distribution, the components of which are the LP-logit ID distribution 22dID and the NM-similarity ID distribution 24dID shown on the top and right axes of Fig. 3. However, such ID distribution may prove long to compute in practice.

As a second implementation, the ID distribution of the classes may be modeled as a normal distribution. Figure 3 shows the bi-variate normal distribution as iso-lines 26ID, and it can be seen that the normal distribution, although being an approximation, fits the ID data reasonably well. In addition, the normal distribution is easy to compute and facilitates the further steps of the OOD detection. The normal distribution may be fitted to the training data, which may be performed during training of the classifier models 14. As the case may be, the above-discussed training method would further comprise calculating the ID distribution based on results of the classifier models on the training dataset thereof.

On that basis, the ID/OOD classification problem (or OOD detection problem) may be formulated as a multi-class Neyman-Pearson task [REF. 8]. Let J be a single class representing the ID samples and $\mathcal{O}$ the class for OOD data. Assume the data are sampled from a two-dimension domain $X = X_{LP} \times X_{NM}$, where $X_{LP}$ is the domain of LP logit scores and $X_{NM}$ the domain of NM distances. The task is then to find a strategy $q^*(x): \mathcal{X} \to \{\mathcal{J}, \mathcal{O}\}$ such that

$$q^* = \arg\min_{q} \int_{x:q(x)\neq\mathcal{O}} p\,(x|\mathcal{O})\,dx$$

$$\text{s. t.} \qquad \epsilon_{\mathcal{J}} = \int_{x:q(x)\neq\mathcal{J}} p\,(x|\mathcal{J})\,dx \leq \epsilon \tag{1}$$

This optimization problem minimizes the false ID acceptance rate for a particular ID class and bounds the maximal ID rejection rate by $\varepsilon$. For $K$ classes, $K$ such problems can be specified. Optionally, the same constant $\varepsilon$ is used for all of them, so that the same fixed rejection rate is required for all classes. That is, the comparison takes into account a threshold which equalizes a false negative rate for the two or more (K) classes.

The optimal strategy for a given $x \in X$ may be constructed using a likelihood ratio $r(x) = p(x|\mathcal{J})/p(x|\mathcal{O})$ so that $q(x) = \mathcal{J}$ if $r(x) > \mu$ and $q(x) = \mathcal{O}$ if $r(x) \leq \mu$. The optimal strategy $q^*$ is obtained by selecting the minimal threshold $\mu$ such that $\epsilon_{\mathcal{J}} \leq \epsilon$. The problem may be solved either analytically for some simple distributions or numerically otherwise.

More generally, the system is thus configured to determine whether the element $x$ belongs to the at least one class J based on a comparison, here a ratio $r(x)$, between a likelihood $p(x|\mathcal{J})$ that the element $x$ belongs to one of the at least one class, determined based on the in-distribution probability distribution, and a likelihood $p(x|\mathcal{O})$ that the element $x$ does not belong to any one of the at least one class, determined based on the out-of-distribution probability distribution. For determining the ID likelihood, the most probable class for sample $x$ can be taken as class $\mathcal{J}$.

To solve this problem, the OOD distribution $p(x|\mathcal{O})$ must be specified. Thus, as described above, the proposed system is configured to obtain an OOD distribution. Per construction, no OOD data may be available to the system, and therefore the same principles as the ID distribution cannot be followed. However, a generic distribution for the OOD data can still be assumed, in particular based on intrinsic properties of the classifier models.

If the OOD distribution is assumed to be uniform in X, the OOD detection would merely be based on the quantiles of the ID distribution (here, the normal distribution $p(x|\mathcal{J})$). However, the score space $X$ was constructed not from general 1D random variables, but from the classification scores of the classifier models 14 (LP and NM). It is thus reasonable to assume that the OOD data will lie in regions where the classifier models 14 do not detect ID data, e.g., in the present case, in a region where the LP score is low and the NM score is high.

Several types of distributions may be envisaged. In an example, the OOD distribution may be modeled as a normal distribution.

For instance, the mean of the normal OOD distribution may be zero. Zero is the mean for both LP and NM scores representing an average non-ID-class data. For the LP classifier, the zero mean assumption is motivated by the fact that in high dimensional spaces, a random vector is likely to be close to orthogonal to the ID-class directional vectors (the weights of the linear layer before the softmax).

For instance, the covariance of the OOD distribution may be a diagonal covariance matrix with large variances. Specifically, the variances in all the directions may be set so that the range of the data is a multiple of the in-distribution range, i.e. very broad. These variances may be determined based on observing rejection rates decision boundaries of simulated normally distributed data. As an alternative, the out-of-distribution probability distribution may be determined based on results of the classifier models 14 on a training dataset thereof, namely the actual ID data ranges.

The iso-lines for the OOD distribution are shown by reference sign 26OOD in Fig. 3.

Figure 3 further shows three optimal strategies (if the assumptions about normality were true) and their corresponding ID rejection rates as dashed decision boundaries 28. Clearly, the strategy rejects the least confident ID samples first.

As mentioned above, solving the Neyman-Pearson problem of eq. (1) for each class gives $K$ strategies $q_k^*$, each optionally calibrated for the same rejection rate. In practice, an acceptable rejection rate $\varepsilon$ would be specified in order to obtain the optimal strategies for normally distributed data.

If desired, classification of the inputs into one of the classes can be achieved by using one of the classifiers, e.g. the softmax probabilities obtained from the LP projections, as they are optimal for this decision task in the present case.

Experiments were conducted with the proposed system, and have shown that the proposed system outperforms all the investigated state-of-the-art methods by a large margin on most of the designed OOD problems, for most common metrics for OOD detection such as AUROC, which measures the ability to distinguish OOD data from ID data by measuring the area under the true positive (TP)- false positive (FP) rates curve, where the ID data is considered be the positive class (see an example in [REF. 9]). The proposed system appears to be particularly efficient for mixed semantic and domain shift problems, but also for domain shift-only problems such as real images vs. clipart or quick draw. Overall, the experiments demonstrate how using a robust representation (feature extractor) leads not only to a state-of-the-art ID classifier, but provides such classifier with very strong cues for OOD detection as well.

The aforementioned detecting method may be implemented as described above in relation to the system.

With reference to Fig. 4, the proposed system 30 may comprise an electronic circuit, a processor (shared, dedicated, or group) 32, a combinational logic circuit, a memory that executes one or more software programs, and/or other suitable components that provide the described functionality. In other words, the system 30 may be a computer device. The detection system 30 may have or may be connected to a memory 34, which may store data, e.g. a computer program which when executed, carries out the detection method according to the present disclosure. In particular, the system 30 or the memory 34 may store software which comprises the classifier models according to the present disclosure. The memory 34 may serve as a recording medium readable by a computer and having recorded thereon at least one computer program including instructions for executing the steps of the detecting method.

The proposed system 30 may have an input for receiving elements such as the images 10. In particular, the system 30 may be connected to a sensor 36, in particular a digital camera. The digital camera is configured such that it can record a scene, and in particular output digital data to the system 30.

If the detection method is to be carried out in real time, one or more of the images 10 may be acquired in real time by an image acquisition module, such as a video acquisition module, e.g. a camera or the like (video cameras, photo cameras, etc.). Alternatively or in addition, the at least one image may be acquired beforehand, and obtained by the system 30 later, e.g. in case of post-processing of the filmed process.

The system 30 and the detection method may be used in the context of a driving method for driving a vehicle, which driving method may further comprise an acquisition step of acquiring the elements (images 10) from at least one in-vehicle sensor, and a controlling step of controlling the vehicle based on whether the image show in-distribution or out-of-distribution data. For instance, the vehicle may stop autonomous driving and ask an operator to take over, if the image shows an unidentified (OOD) object.

In other embodiments, the detection method may be used in the context of a method for supporting human activities in a factory. For instance, the method may further comprise an acquisition step of acquiring the elements (images 10) from at least one sensor in the factory, and a controlling step of controlling the factory facilities (i.e. starting/stopping a device, issuing a warning signal, recording data, etc.) based on whether the image show in-distribution or out-of-distribution data.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A system (30) for detecting whether an element belongs to at least one class, the system being configured to:

- obtain an in-distribution probability distribution (26ID) of the at least one class, the in-distribution probability distribution being a distribution of a probability to belong to the at least one class as a function of a result of at least one classifier model (14);
- obtain an out-of-distribution probability distribution (26OOD), the out-of-distribution probability distribution being a distribution of a probability not to belong to any one of the at least one class as a function of the result of the at least one classifier model (14);
- determine whether the element belongs to the at least one class based on a comparison between a likelihood that the element belongs to one of the at least one class, determined based on the in-distribution probability distribution, and a likelihood that the element does not belong to any one of the at least one class, determined based on the out-of-distribution probability distribution.

2. The system of claim 1, wherein the at least one classifier model (14) comprises N classifier models, N greater than or equal to 2, and the in-distribution probability distribution and the out-of-distribution probability distribution are N-dimensional distributions.

3. The system of claim 1 or 2, wherein the at least one classifier model (14) includes at least one of a linear probe classifier, a nearest mean classifier and a multi-layer perceptron.

4. The system of any one of claims 1 to 3, wherein at least one of the in-distribution probability distribution and the out-of-distribution probability distribution is modeled as a normal distribution.

5. The system of any one of claims 1 to 4, wherein at least one of the in-distribution probability distribution and the out-of-distribution probability distribution is determined based on results of the at least one classifier model (14) on a training dataset thereof.

6. The system of any one of claims 1 to 5, wherein the at least one class comprises two or more classes and the comparison takes into account a threshold which equalizes a false negative rate for the two or more classes.

7. The system of any one of claims 1 to 6, wherein the element comprises at least one image (10), at least one video, at least one audio signal, at least one electrical signal or a combination thereof.

8. A computer-implemented method for detecting whether an element belongs to at least one class, comprising:

   - obtaining an in-distribution probability distribution (26ID) of the at least one class, the in-distribution probability distribution being a distribution of a probability to belong to the at least one class as a function of a result of at least one classifier model (14);
   - obtaining an out-of-distribution probability distribution (26OOD), the out-of-distribution probability distribution being a distribution of a probability not to belong to any one of the at least one class as a function of the result of the at least one classifier model (14);
   - determining whether the element belongs to the at least one class based on a comparison between a likelihood that the element belongs to one of the at least one class, determined based on the in-distribution probability distribution, and a likelihood that the element does not belong to any one of the at least one class, determined based on the out-of-distribution probability distribution.

9. A computer-implemented method for training the system of any one of claims 1 to 7, comprising:

   - providing a pre-trained feature extractor (12);
   - providing a training dataset;
   - training (16) the at least one classifier model (14) based on features of the training dataset extracted by the feature extractor (12).

10. The method of claim 9, wherein the feature extractor (12) is not fine-tuned during the training of the at least one classifier model (14).

11. The method of claim 9 or 10, wherein the pre-trained feature extractor (12) has been trained independently from the at least one class, optionally in a self-supervised manner.

12. The method of any one of claims 9 to 11, wherein every element of the training dataset belongs to the at least one class.

13. The method of any one of claims 9 to 12, further comprising calculating at least one of the in-distribution probability distribution (26ID) and the out-of-distribution probability distribution (26OOD) based on results of the at least one classifier model (14) on a training dataset thereof.

14. A computer program set including instructions for executing the steps of the method of any one of claims 8 to 13 when said program set is executed by at least one computer.

15. A recording medium readable by a computer and having recorded thereon at least one computer program including instructions for executing the steps of the method of any one of claims 8 to 13.

**FIG.1**

FIG.2

FIG.3

FIG.4

Europäisches
Patentamt

European
Patent Office

Office européen
des brevets

**EUROPEAN SEARCH REPORT**

Application Number

EP 23 16 1346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/253747 A1 (REN JIE [US] ET AL) 11 August 2022 (2022-08-11) <br> * paragraph [0002] * <br> * paragraph [0006] * <br> * paragraph [0028] * <br> * paragraph [0041] * <br> * paragraph [0063] * <br> * paragraph [0067] – paragraph [0068] * <br> * paragraph [0082] – paragraph [0086] * <br> * paragraph [0089] * <br> ----- | 1-15 | INV.<br>G06F18/243<br>G06V10/44<br>G06N3/02<br>G06F18/213<br>G06F18/2415 |
| A | US 2021/150366 A1 (RAMACHANDRAN GOVARDANA SACHITHANANDAM [US] ET AL) 20 May 2021 (2021-05-20) <br> * the whole document * <br> ----- | 1-15 | |
| | | | **TECHNICAL FIELDS SEARCHED (IPC)** <br><br> G06F <br> G06V <br> G06N |

The present search report has been drawn up for all claims

| Place of search | Date of completion of the search | Examiner |
|---|---|---|
| The Hague | 26 May 2023 | Martinez, Francis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 16 1346**

This annex lists the patent family members relating to the patent documents cited in the above-mentioned European search report.
The members are as contained in the European Patent Office EDP file on
The European Patent Office is in no way liable for these particulars which are merely given for the purpose of information.

**26-05-2023**

| Patent document cited in search report | | Publication date | Patent family member(s) | | Publication date |
|---|---|---|---|---|---|
| US 2022253747 | A1 | 11-08-2022 | CN | 114127747 A | 01-03-2022 |
| | | | EP | 3980941 A1 | 13-04-2022 |
| | | | US | 2022253747 A1 | 11-08-2022 |
| | | | WO | 2020247200 A1 | 10-12-2020 |
| US 2021150366 | A1 | 20-05-2021 | US | 2021150365 A1 | 20-05-2021 |
| | | | US | 2021150366 A1 | 20-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Learning transferable visual models from natural language supervision. **ALEC RADFORD ; JONG WOOK KIM ; CHRIS HALLACY ; ADITYA RAMESH ; GABRIEL GOH ; SANDHINI AGARWAL ; GIRISH SASTRY ; AMANDA ASKELL ; PAMELA MISHKIN ; JACK CLARK et al.** International Conference on Machine Learning. PMLR, 2021, 8748-8763
- PyTorch: An Imperative Style, High-Performance Deep Learning Library. **PASZKE, A. et al.** Advances in Neural Information Processing Systems. Curran Associates, Inc, 2019, vol. 32, 8024-8035
- **LI DENG.** The MNIST database of handwritten digit images for machine learning research. *IEEE signal processing magazine,* 2012, vol. 29 (6), 141-142
- **ALEX KRIZHEVSKY.** Learning multiple layers of features from tiny images. *Technical report,* 2009
- **BOLEI ZHOU ; AGATA LAPEDRIZA ; ADITYA KHOSLA ; AUDE OLIVA ; ANTONIO TORRALBA.** Places: A 10 million image database for scene recognition. *IEEE transactions on pattern analysis and machine intelligence,* 2017, vol. 40 (6), 1452-1464

- **YUVAL NETZER ; TAOWANG ; ADAM COATES ; A. BISSACCO ; BOWU ; A. NG.** Reading digits in natural images with unsupervised feature learning. *NIPS Workshop on Deep Learning and Unsupervised Feature Learning,* 2011
- **ANTONIO TORRALBA ; ROB FERGUS ; WILLIAM T FREEMAN.** 80 million tiny images: A large data set for nonparametric object and scene recognition. *IEEE transactions on pattern analysis and machine intelligence,* 2008, vol. 30 (11), 1958-1970
- **JERZY NEYMAN ; EGON SHARPE PEARSON.** Ix. on the problem of the most efficient tests of statistical hypotheses. Philosophical Transactions of the Royal Society of London. *Series A, Containing Papers of a Mathematical or Physical Character,* 1933, vol. 231 (694-706), 289-337
- **SAGAR VAZE ; KAI HAN ; ANDREA VEDALDI ; ANDREW ZISSERMAN.** Open-set recognition: A good closed-set classifier is all you need. *International Conference on Learning Representations,* 2022